# EUROPÄISCHE PATENTSCHRIFT

(11) **EP 4 187 135 B1**
(45) Veröffentlichungstag und Bekanntmachung des Hinweises auf die Patenterteilung: **23.04.2025**
(21) Anmeldenummer: 22208621.7
(22) Anmeldetag: 21.11.2022
(51) Int. Cl.: F16L 11/04, B32B 1/08, B32B 27/30

(54) **WASSERSTOFFROHR**
HYDROGEN PIPE
TUYAU D'HYDROGÈNE

(30) Priorität: 30.11.2021 DE 202021106514 U
(43) Veröffentlichungstag der Anmeldung: 31.05.2023
(73) Patentinhaber: TI Automotive (Fuldabrück) GmbH, 34277 Fuldabrück (DE)
(72) Erfinder: HÄCKEL, Andre, 34513 Waldeck (DE); FAHRENHOLZ, Frank, 34128 Kassel (DE); SCHRAMOWSKI, Martin, 34134 Kassel (DE); ARNOLD, Siegfried, 34128 Kassel (DE)
(74) Vertreter: Novagraaf Group

(56) Entgegenhaltungen:
- EP-A1- 1 182 345
- EP-A1- 1 195 244
- US-A1- 2005 170 122

## Beschreibung

Die Erfindung betrifft die Verwendung eines Rohrs zur Führung von Wasserstoff gemäß dem Oberbegriff des Anspruchs 1. Durch Koextrusion hergestellte Kraftfahrzeugrohrleitungen für Kraftstoffe sind aus EP1182345 bekannt.

Ein derartiges Rohr zur Führung von Wasserstoff offenbart US 2004/0069361 A1. Dieses Rohr umfasst eine äußere Sperrschicht aus Ethylen-Vinylalkohol-Copolymer (EVOH, oft auch "EVAL" bezeichnet), welche von zwei Haftvermittlerschichten aus Polyurethan umgeben ist. Die innerste Schicht weist ein Fluorpolymer und insbesondere Polyvinylidendifluorid (PVDF), Ethylen-Tetrafluorethylen-Hexafluorpropylen Fluorterpolymer (EFEP) oder Ethylen-Tetrafluorethylen-Copolymer (ETFE) auf und bildet aufgrund der guten Barrierewirkung zugleich eine innere Sperrschicht. Die äußerste Schicht dieses Rohrs wird durch Polybutylenterephthalat (PBT) gebildet, liegt an einer Außenseite der äußeren Sperrschicht an und stellt daher eine Begrenzungsschicht dar.

Ein Rohr zur Führung von Wasserstoff ist ferner in US 2010/0035116 A1 offengelegt. Dieses Rohr weist eine Sperrschicht aus EVOH auf, welche von einer Begrenzungsschicht aus Polyamid (PA) umschlossen ist. Eine äußerste Schicht umfasst ein Polyphthalamid (PPA) und liegt unmittelbar auf der Begrenzungsschicht auf. Die Sperrschicht aus EVOH umschließt eine direkt anliegende, ETFE umfassende Schicht, welche ihrerseits von einer innersten Schicht aus PA begrenzt wird.

Nachteilig an diesen bekannten Wasserstoffrohren ist, dass die Permeabilität noch zu hoch ist, so dass noch immer zuviel Wasserstoff - auffällig insbesondere bei langen Standzeiten der Fahrzeuge - durch die Rohre diffundiert und damit verloren geht.

Diese Aufgabe wird gelöst durch ein Rohr, insbesondere eine Verwendung eines Rohrs, zur Führung von Wasserstoff, insbesondere in einem Fahrzeug, wobei das Rohr ein Lumen einschließt und mehrere Schichten umfasst, wobei das Rohr wenigstens zwei Sperrschichten aufweist, wobei eine innere Sperrschicht der wenigstens zwei Sperrschichten einen ersten Kunststoff umfasst, wobei eine äußere Sperrschicht der wenigstens zwei Sperrschichten einen zweiten Kunststoff umfasst, wobei der erste Kunststoff ein Vinylalkoholkunststoff ist, wobei die Sperrschichten durch eine Trennschicht voneinander getrennt sind, wobei das Rohr eine Stützschicht aufweist, wobei die Stützschicht von der inneren Sperrschicht umschlossen ist, wobei der zweite Kunststoff ein Vinylalkoholkunststoff ist.

Der Erfindung liegt zunächst die Erkenntnis zugrunde, dass die Permeabilität einer Sperrschicht bezogen auf Wasserstoff unter Verwendung von einem Vinylalkoholkunststoff gering ist. Grundsätzlich kann die Permeabilität durch größere Schichtdicken der Sperrschicht entscheidend verringert werden kann. Allerdings sind Sperrschichten mit Vinylalkoholkunststoffen recht spröde, was kritisch für die in aller Regel zahlreichen, vorzunehmenden Biegungen eines solchen Rohrs ist. Es wurde gefunden, dass bei zu großen Schichtdicken der Sperrschicht diese Sperrschicht während des Biegevorgangs deutlich häufiger Mikrorisse ausbildet. Diese Mikrorisse führen zu einer erheblich größeren Permeabilität, so dass die Vergrößerung der Schichtdicke der Vinylalkohol-Sperrschicht nur ein sehr begrenztes Mittel zur Verbesserung der Barriereeigenschaften darstellt.

Der Erfindung liegt insbesondere die Erkenntnis zugrunde, dass das Vorsehen einer zweiten Sperrschicht mit einem Vinylalkoholkunststoff unter Zwischenschaltung einer Trennschicht zwischen den beiden Sperrschichten - bei einer gleichbleibend niedrigen Risswahrscheinlichkeit - eine deutlich größere Gesamtschichtdicke von Sperrschichten mit einem Vinylalkoholkunststoff ermöglicht. Durch das Vorsehen von zwei, drei oder mehr Vinylalkohol-Sperrschichten mit entsprechend vielen zwischengeschalteten Trennschichten kann die Gesamtschichtdicke der aufaddierten Schichtdicken der einzelnen Vinylalkohol-Sperrschichten im Vergleich zu einer einzigen Vinylalkohol-Sperrschicht sogar vervielfacht werden, während die Risswahrscheinlichkeit und damit auch der Ausschuss konstant niedrig bleiben. Die eingangs genannte Aufgabe ist damit gelöst.

Der Begriff "Schicht" meint vorzugsweise, dass eine Schicht von einer anderen Schicht unterscheidbar ist, weil diese beiden Schichten unterschiedliche Materialzusammensetzungen aufweisen. Eine Schicht muss nicht notwendigerweise aus einer einzigen integralen bzw. homogen verteilten Materialzusammensetzung bestehen. Es ist möglich, dass eine Schicht Teilschichten bzw. Lagen aufweist, welche ihrerseits voneinander unterscheidbar sind. Vorteilhafterweise besteht eine einzelne Lage aus einer einzigen, homogen verteilten Materialzusammensetzung.

Der Ausdruck "Vinylalkoholkunststoff" meint vorzugsweise Polymere mit einem Vinylalkohol-Monomer und insbesondere Ethylen-Vinyl-alkohol-Copolymer (EVOH), Polyvinylalkohol (PVOH) und Butendiol-Vinylalkohol-Copolymer (BVOH). Es ist möglich, dass der Vinylalkoholkunststoff der einzige Kunststoff der inneren Sperrschicht und/oder der äußeren Sperrschicht ist. Gemäß einer Ausführungsform umfasst die innere Sperrschicht und/oder die äußere Sperrschicht eine Mischung aus dem Vinylalkoholkunststoff mit einem zweiten oder mit weiteren Stoffen und insbesondere mit einem Kunststoff bzw. weiteren Kunststoffen.

Es ist ganz besonders bevorzugt, dass das Rohr ein Kunststoffrohr ist und vorzugsweise zu wenigstens 50 bzw. 70 bzw. 90 bzw. 95 bzw. 97 Gew.% Kunststoffe umfasst. Vorzugsweise umfasst eine/die Schutzschicht und/oder die Stützschicht und/oder die innere Sperrschicht und/oder die Trennschicht und/oder die äußere Sperrschicht und/oder die Begrenzungsschicht zu wenigstens 50 bzw. 70 bzw. 90 bzw. 95 Gew.% einen Kunststoff, insbesondere einen thermoplastischen Kunststoff. Zweckmäßigerweise weist das Rohr wenigstens eine, vorzugsweise wenigstens zwei bzw. drei bzw. vier bzw. fünf Biegungen auf. Das Rohr besitzt zweckmäßigerweise einen Außendurchmesser von wenigstens 2 mm bzw. 3 mm bzw. 4 mm.

Es ist besonders bevorzugt, dass die Trennschicht einen Kunststoff, vorzugsweise ein Polyamid und insbesondere PA 6 umfasst. Wenn die Trennschicht ein Polyamid aufweist, so bietet die Trennschicht eine gute Zähigkeit, wodurch die spröderen Sperrschichten durch ein sehr robustes, etwas weicheres Material voneinander getrennt werden. Es ist ganz besonders bevorzugt, dass die Trennschicht ein weicheres Material als die innere Sperrschicht und/oder äußere Sperrschicht aufweist. Der Begriff "weicher" bezieht sich vorzugsweise auf die bei Raumtemperatur gemessene Shore-Härte D und insbesondere auf die Norm DIN EN ISO 868:2003-10. Durch die Trennschicht entstehen zwei dünnere Sperrschichten, so dass der Schichtverbund aus innerer Sperrschicht, Trennschicht und äußerer Sperrschicht insgesamt eine geringere Sprödigkeit aufweist. Wenn die Trennschicht PA 6 aufweist, so ist die Trennschicht nicht nur sehr robust, sondern haftet auch gut an der inneren Sperrschicht und der äußeren Sperrschicht. Hierdurch wird erreicht, dass der Schichtverbund aus innerer Sperrschicht, Trennschicht und äußerer Sperrschicht kaum zur Delamination neigt. Mit Vorteil liegt die Trennschicht an der inneren Sperrschicht und/oder an der äußeren Sperrschicht an. Zweckmäßigerweise beträgt die Schichtdicke der Trennschicht wenigstens 0,05 mm bzw. 0,06 mm bzw. 0,08 mm. Vorzugsweise beläuft sich die Schichtdicke der Trennschicht auf höchstens 0,3 mm bzw. 0,4 mm bzw. 0,5 mm. Tendenziell haben größere Schichtdicken der Trennschicht den Vorteil, dass die Sperrschichten weiter voneinander separiert werden, so dass noch stärkere Biegungen möglich sind. Umgekehrt sind möglichst dünne Schichten dann von Vorteil, wenn das Rohr möglichst leicht bzw. klein gestaltet werden soll, was außerdem den Einsatz von Material einspart.

Es ist sehr bevorzugt, dass die Stützschicht ein Material aufweist, welches weicher als dasjenige der inneren Sperrschicht ist. Es ist vorteilhaft, dass die Stützschicht an der inneren Sperrschicht anliegt. Mit Vorteil umfasst die Stützschicht einen Kunststoff, vorzugsweise ein Polyamid und insbesondere PA 6. Wenn die Stützschicht ein weicheres Material als die innere Sperrschicht bzw. Polyamid umfasst, so stabilisiert die Stützschicht die Innenseite der inneren Sperrschicht und verringert so insbesondere die Wahrscheinlichkeit der Bildung von Rissen auf der Innenseite der inneren Sperrschicht. Wenn die Stützschicht PA 6 aufweist, so bringt dies die Vorteile des Materials Polyamid mit sich und außerdem noch den Vorteil der verbesserten Haftung an der Innenseite der inneren Sperrschicht, was die Wahrscheinlichkeit der Delamination bei Biegungen verringert. Es ist möglich, dass die Stützschicht die innerste Schicht ist und vorzugsweise einen Zuschlagstoff zur Erhöhung der Leitfähigkeit aufweist. Der Zuschlagstoff kann beispielsweise Leitruß sein. Die Schichtdicke der Stützschicht mag wenigstens 0,05 mm bzw. 0,06 mm bzw. 0,07 mm betragen. Mit Vorteil beläuft sich die Schichtdicke der Stützschicht auf höchstens 0,5 mm bzw. 0,4 mm bzw. 0,3 mm. Es ist sehr bevorzugt, dass die Schichtdicke der Stützschicht kleiner ist als die Schichtdicke der Trennschicht. Denn im Gegensatz zur Trennschicht muss die Stützschicht keine Sperrschichten voneinander separieren, so dass hier grundsätzlich kleinere Schichtdicken ausreichen. Die Schichtdicke der Stützschicht mag vorzugsweise um wenigstens 5 % bzw. 10 % bzw. 20 % bzw. 30 % bzw. 50 % kleiner sein als die Schichtdicke der Trennschicht.

Gemäß einer besonders bevorzugten Ausführungsform ist der erste Kunststoff und/oder der zweite Kunststoff ein EVOH, ein BVOH oder ein PVOH, wobei bevorzugt ist, dass der erste Kunststoff und/oder der zweite Kunststoff ein EVOH oder ein PVOH ist. Diese drei Kunststoffsorten sind besonders bevorzugt, weil sie jeweils gute Barriereeigenschaften aufweisen, gleichzeitig gut zu verarbeiten sind und insgesamt verhältnismäßig geringe Herstellungskosten nach sich ziehen. Da BVOH deutlich weicher gestaltet werden kann als EVOH und PVOH und gleichzeitig hinsichtlich produktionsspezifischer Hürden von geringerem Vorteil als EVOH und PVOH ist, kommt die vorliegende Erfindung vor allem für EVOH und PVOH in Betracht. Ganz besonders ist der Vinylalkoholkunststoff EVOH bevorzugt. Die Barriereeigenschaft von EVOH wird insbesondere über seinen Ethylenanteil gesteuert. Je geringer der Ethylenanteil ist, umso besser ist die Barrierewirkung und umso spröder ist das EVOH. Folglich profitieren von der vorliegenden Erfindung insbesondere solche Rohre, welche einen geringen Anteil an Ethylen im EVOH aufweisen. Vorzugsweise beträgt der Ethylenanteil des EVOH der inneren und/oder der äußeren Sperrschicht höchstens 45 % bzw. 40 % bzw. 36 % bzw. 33 %. Es ist bevorzugt, dass die innere Sperrschicht und die äußere Sperrschicht dieselbe Materialzusammensetzung aufweisen. Es ist möglich, dass die innere Sperrschicht und die äußere Sperrschicht unterschiedliche Materialzusammensetzungen aufweisen.

Gemäß einer besonders bevorzugten Ausführungsform ist die Schichtdicke der inneren Sperrschicht kleiner-gleich (≤) der, und vorzugsweise kleiner als die, Schichtdicke der äußeren Sperrschicht. Dies bewirkt, dass - bei einer gleich bleibenden addierten Dicke der beiden Sperrschichten - die Risswahrscheinlichkeit verringert wird. Denn bei starken Biegungen wird die innere Sperrschicht stärker belastet als die äußere Sperrschicht, so dass die äußere Sperrschicht mit einer etwas größeren Schichtdicke als die innere Sperrschicht versehen werden kann. Es ist bevorzugt, dass die Schichtdicke der inneren Sperrschicht wenigstens 5 % bzw. 10 % bzw. 15 % kleiner ist als die Schichtdicke der äußeren Sperrschicht. Vorzugsweise ist die Schichtdicke der inneren Sperrschicht um höchstens 70 % bzw. 60 % bzw. 50 % kleiner als die Schichtdicke der äußeren Sperrschicht. Die Schichtdicke der inneren Sperrschicht mag vorzugsweise wenigstens 0,05 mm bzw. 0,06 mm bzw. 0,08 mm betragen. Mit Vorteil beläuft sich die Schichtdicke der inneren Sperrschicht auf höchstens 0,5 mm bzw. 0,4 mm bzw. 0,3 mm. Bevorzugtermaßen beträgt die Schichtdicke der äußeren Sperrschicht wenigstens 0,06 mm bzw. 0,07 mm bzw. 0,09 mm. Vorzugsweise beläuft sich die Schichtdicke der äußeren Sperrschicht auf höchstens 0,6 mm bzw. 0,5 mm bzw. 0,4 mm.

Bevorzugtermaßen beträgt die addierte Dicke der Schichtdicken der inneren Sperrschicht und der äußeren Sperrschicht wenigstens 0,11 mm bzw. 0,12 mm bzw. 0,13 mm. Es ist bevorzugt, dass sich die addierte Dicke der Schichtdicken der inneren Sperrschicht und der äußeren Sperrschicht auf höchstens 1,0 mm bzw. 0,8 mm bzw. 0,6 mm bzw. 0,4 mm beläuft. Zweckmäßigerweise beträgt die addierte Dicke der Schichtdicken der inneren Sperrschicht und der äußeren Sperrschicht wenigstens 7 % bzw. 14 % bzw. 20 % der Gesamtwanddicke des Rohrs. Bevorzugtermaßen beläuft sich die addierte Dicke der Schichtdicken der inneren Sperrschicht und der äußeren Sperrschicht auf höchstens 60 % bzw. 50 % bzw. 40 % der Gesamtwanddicke des Rohrs. Die Gesamtwanddicke des Rohrs mag wenigstens 0,5 mm bzw. 0,8 mm bzw. 1,0 mm betragen. Vorteilhafterweise der beläuft sich die Gesamtwanddicke des Rohrs auf höchstens 4,0 mm bzw. 3,5 mm bzw. 3,0 mm.

Es ist möglich, dass das Rohr eine dritte Sperrschicht und eine zweite Trennschicht aufweist, wobei die dritte Sperrschicht die äußere Sperrschicht umschließt, wobei die zweite Trennschicht zwischen der äußeren Sperrschicht und der dritten Sperrschicht angeordnet ist. Es ist bevorzugt, dass die dritte Sperrschicht einen Kunststoff umfasst, wobei der Kunststoff vorzugsweise ein Vinylalkoholkunststoff ist. Der Vinylalkoholkunststoff der dritten Sperrschicht kann ein EVOH, ein PVOH oder ein BVOH sein, wobei ein EVOH oder ein PVOH bevorzugt ist. Der Kunststoff der dritten Sperrschicht ist besonders bevorzugtermaßen ein EVOH. Das EVOH der dritten Sperrschicht weist einen Ethylenanteil von vorzugsweise wenigstens 45 % bzw. 40 % bzw. 36 % bzw. 33 % auf. Zweckmäßigerweise besitzt die dritte Sperrschicht dieselbe Materialzusammensetzung wie die innere Sperrschicht und/oder die äußere Sperrschicht. Der Vorteil einer dritten Sperrschicht besteht darin, dass mithilfe der zweiten Trennschicht die Rissgefahr bei gleichbleibender Dicke der addierten Schichtdicken der drei Sperrschichten weiter verringert wird.

Es ist bevorzugt, dass die zweite Trennschicht einen Kunststoff, insbesondere ein Polyamid und vorzugsweise PA 6, aufweist. Es ist von Vorteil, dass das Material der zweiten Trennschicht weicher ist als dasjenige der äußeren Sperrschicht und/oder der dritten Sperrschicht. Dies bewirkt eine Stabilisierung der Innenseite der dritten Sperrschicht sowie auch der Außenseite der äußeren Sperrschicht. Im Falle eines Polyamids weist die Trennschicht gute mechanische Eigenschaften auf, während im Falle eines PA 6 diese guten mechanischen Eigenschaften noch durch eine gute Haftung unterstützt werden. Zweckmäßigerweise liegt die zweite Trennschicht an der äußeren Sperrschicht und/oder an der dritten Sperrschicht an.

Mit Vorteil ist die Schichtdicke der zweiten Trennschicht kleiner als die Schichtdicke der Begrenzungsschicht. Es ist bevorzugt, dass die Schichtdicke der zweiten Trennschicht größer ist als die Schichtdicke der Stützschicht. Die Schichtdicke der Trennschicht mag wenigstens 0,05 m bzw. 0,06 mm bzw. 0,07 mm betragen. Vorteilhafterweise beläuft sich die Schichtdicke der zweiten Trennschicht auf höchstens 0,5 mm bzw. 0,4 mm bzw. 0,3 mm.

Es ist bevorzugt, dass die Schichtdicke der dritten Sperrschicht größer ist als die Schichtdicke der ersten Sperrschicht und/oder der zweiten Sperrschicht. Dies ist möglich, da die dritte Sperrschicht bei der Biegung des Rohrs geringeren Kräften ausgesetzt wird als die innere und die äußere Sperrschicht. Die Schichtdicke der dritten Sperrschicht mag wenigstens 0,07 mm bzw. 0,08 mm bzw. 0,1 mm betragen. Mit Vorteil beläuft sich die Schichtdicke der dritten Sperrschicht auf höchstens 0,7 mm bzw. 0,6 mm bzw. 0,5 mm.

Gemäß einer bevorzugten Ausführungsform umschließt eine Begrenzungsschicht die äußere Sperrschicht bzw. die dritte Sperrschicht, wobei die Begrenzungsschicht vorzugsweise an der äußeren Sperrschicht bzw. dritten Sperrschicht anliegt. Mit Vorteil weist die Begrenzungsschicht einen Kunststoff, vorzugsweise ein Polyamid und/oder ein thermoplastisches Elastomer, und besonders vorzugsweise PA 6, PA 11, PA 12 und/oder PA 612, auf. Es ist bevorzugt, dass die Begrenzungsschicht dicker ist als die Stützschicht und/oder dicker ist als die Trennschicht. Eine dicke Begrenzungsschicht ist von Vorteil, da sie das Rohr nach außen hin schützt. Hierunter fallen neben chemischen noch vor allem mechanische Belastungen, auf welche spröde und ungeschützte Sperrschichten empfindlich reagieren können. Die Schichtdicke der Begrenzungsschicht mag wenigstens 0,07 mm bzw. 0,08 mm bzw. 0,09 mm betragen. Die Schichtdicke der Begrenzungs-schicht beläuft sich vorzugsweise auf höchstens 0,4 mm bzw. 0,3 mm bzw. 0,2 mm. Gemäß einer Ausführungsform umfasst die Begrenzungsschicht lediglich eine Lage, wobei die lediglich eine Lage vorzugsweise einen Kunststoff, weiter vorzugsweise ein Polyamid und/oder ein thermoplastisches Elastomer, insbesondere PA 6, PA 11, PA 12 und/oder PA 612 aufweist. Der Kunststoff kann einen Zuschlagstoff aufweisen, mit dessen Hilfe die lediglich eine Lage der Begrenzungsschicht besser an dem Vinylalkoholkunststoff haftet. Es ist sehr bevorzugt, dass das Material der lediglich einen Lage der Begrenzungsschicht weicher ist als das Material der äußeren Sperrschicht bzw. einer/der dritten Sperrschicht. Hierdurch wird eine Außenseite der äußeren Sperrschicht bzw. der dritten Sperrschicht stabilisiert.

Vorzugsweise umfasst das Rohr wenigstens eine Haftvermittlerlage. Gemäß einer Ausführungsform weist die Begrenzungsschicht die Haftvermittlerlage und eine Begrenzungslage auf, wobei bevorzugtermaßen die Begrenzungslage die Haftvermittlerlage umschließt. Es ist von Vorteil, dass die äußere Begrenzungslage einen Kunststoff, bevorzugtermaßen ein Polyamid und/oder ein thermoplastisches Elastomer, insbesondere PA 6, PA 11, PA 12 und/oder PA 612, umfasst. Zweckmäßigerweise ist die Haftvermittlerlage zwischen der äußeren Sperrschicht bzw. der dritten Sperrschicht und der Begrenzungslage angeordnet. Vorteilhafterweise liegt die Haftvermittlerschicht an der äußeren Sperrschicht bzw. der dritten Sperrschicht an. Bevorzugtermaßen liegt die Haftvermittlerlage an der Begrenzungslage an. Diese Anordnung ermöglicht es, auch andere, weniger gut an dem Vinylalkoholkunststoff haftende Kunststoffe vorzusehen, um die Möglichkeit einer Delamination zu verringern. Weniger gut haftende Kunststoffe sind beispielsweise PA 11, PA 12 oder PA 612, welche mithilfe eines Haftvermittlers, beispielsweise umfassend ein Polyolefin und insbesondere Polypropylen oder Polyethylen, auf der äußeren Sperrschicht bzw. der dritten Sperrschicht angeordnet werden können.

Es ist möglich, dass die Stützschicht eine Schutzschicht umschließt, wobei die Schutzschicht bevorzugt die innerste Schicht des Rohrs bildet. Die Schutzschicht umfasst vorzugsweise einen Kunststoff und mag insbesondere ein Fluorpolymer oder ein Polyamid aufweisen. Das Fluorpolymer kann beispielsweise ein ETFE sein. Die Schichtdicke der Schutzschicht mag wenigstens 0,05 mm bzw. 0,07 mm bzw. 0,09 mm betragen. Zweckmäßigerweise beläuft sich die Schichtdicke der Schutzschicht auf höchstens 0,3 mm bzw. 0,25 mm bzw. 0,2 mm.

Mit Vorteil umfasst die innerste Schicht, insbesondere die Stützschicht bzw. die Schutzschicht, einen Zuschlagstoff zur Vergrößerung der Leitfähigkeit. Der Zuschlagstoff kann beispielsweise Leitruß sein.

Nachfolgend wird die Erfindung anhand von drei Ausführungsbeispielen in drei Figuren erläutert. Es zeigen
- Fig. 1: einen Querschnitt eines ersten erfindungsgemäßen Rohres,
- Fig. 2: einen Querschnitt eines zweiten erfindungsgemäßen Rohres und
- Fig. 3: einen Querschnitt eines dritten erfindungsgemäßen Rohres.

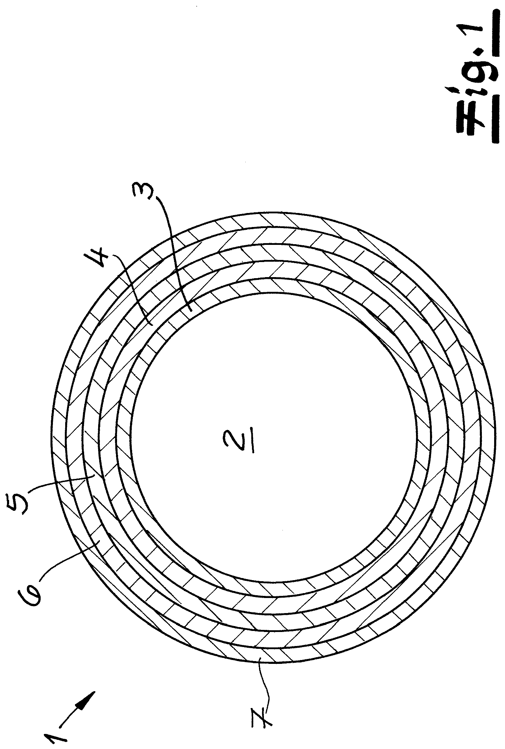

Der Querschnitt eines ersten Ausführungsbeispiels eines Rohres 1 ist in Fig. 1 abgebildet. Demnach umfasst das Rohr 1 dieses Ausführungsbeispiels insgesamt fünf Schichten (3, 4, 5, 6, 7), welche ein Lumen 2 umschließen. Das Rohr 1 dieses Ausführungsbeispiels umfasst von innen nach außen eine Stützschicht 3, eine innere Sperrschicht 4, eine Trennschicht 5, eine äußere Sperrschicht 6 sowie eine Begrenzungsschicht 7.

Im Falle der inneren Sperrschicht 4 und der äußeren Sperrschicht 6 handelt es sich um Schichten, welche jeweils einen Vinylalkoholkunststoff aufweisen. In diesem Ausführungsbeispiel weisen beide Sperrschichten ein EVOH auf, wobei bevorzugt ist, dass die innere Sperrschicht 4 und/oder die äußere Sperrschicht 6 aus einem EVOH bestehen. Vorzugsweise beläuft sich der Ethylenanteil des Vinylalkoholkunststoffs der inneren Sperrschicht 4 und/oder der äußeren Sperrschicht 6 auf höchstens 35 Mol-% und weiter vorzugsweise auf höchstens 33 Mol-%. Gemäß einer speziellen Ausführungsform beläuft sich der Ethylenanteil der innere Sperrschicht 4 und/oder der äußeren Sperrschicht 6 auf 32 Mol-%. Es ist bevorzugt, dass die innere Sperrschicht 4 und/oder die äußere Sperrschicht 6 aus dem Vinylalkoholkunststoff besteht bzw. bestehen. Vorteilhafterweise bestehen die innere Sperrschicht 4 und die äußere Sperrschicht 6 aus demselben Material. In diesem Ausführungsbeispiel beträgt die Schichtdicke der inneren Sperrschicht 4 0,12 mm, während die Schichtdicke der äußeren Sperrschicht 6 beispielsweise 0,15 mm betragen mag.

Es ist sehr bevorzugt, dass die Trennschicht 5 einen Kunststoff aufweist, bei welchem es sich vorzugsweise um ein Polyamid und besonders vorzugsweise um PA 6 handelt. PA 6 haftet gut an Vinylalkoholkunststoffen und insbesondere an Ethylen-Vinylalkohol-Copolymeren, so dass die Trennschicht 5 zusammen mit den beiden Sperrschichten 4, 6 einen robusten Schichtverbund 4, 5, 6 bildet. Zudem ist Polyamid bzw. PA 6 weniger spröde bzw. zäher als die beiden Sperrschichten 4, 6 aus EVOH, so dass die Trennschicht den Schichtverbund 4, 5, 6 auch in dieser Hinsicht stabilisiert. An dem Schichtverbund 4, 5, 6 wird der Grundgedanke der Erfindung deutlich, da der Schichtverbund 4, 5, 6 aufgrund der Trennschicht 5 deutlich besser Biegungen zulässt als eine durchgehende Barriereschicht, deren Schichtdicke 0,27 mm und damit der aufaddierten Schichtdicken der inneren Sperrschicht 4 und der äußeren Sperrschicht 6 entspricht. Die Schichtdicke der Trennschicht 5 mag in diesem Ausführungsbeispiel 0,1 mm betragen.

Die Stützschicht 3 umfasst vorzugsweise einen Kunststoff und besteht vorzugsweise aus einem Kunststoff. Der Kunststoff der Stützschicht 3 kann insbesondere ein Polyamid, vorzugsweise PA 6, umfassen. Eine typische Schichtdicke der Stützschicht mag 0,08 mm sein. Die Stützschicht 3 ist in diesem Ausführungsbeispiel diejenige Schicht, welche das Rohr 1 nach innen hin und damit zum Lumen 2 hin begrenzt und folglich auch mit dem Wasserstoff in Kontakt kommt. Insoweit schützt die Stützschicht die innere Sperrschicht 4 beispielsweise vor Auswaschungen. Insbesondere aber stützt die Stützschicht 3 die verhältnismäßig spröde innere Sperrschicht 4 auf deren Innenseite ab, so dass die innere Sperrschicht 4 bei der Ausbildung von Biegungen weniger Risse ausbildet. Außerdem schützt die Stützschicht 3 die innere Sperrschicht 4, wenn das Rohr 1 auf einen Schnellverbinder aufgeschoben wird und dort einen Presssitz erfährt. Mit Vorteil weist die Stützschicht 3, wenn sie die innerste Schicht des Rohres 1 bildet, einen Zuschlagstoff auf, welcher die Leitfähigkeit erhöht. Bei diesem Zuschlagstoff kann es sich beispielsweise um Leitruß handeln, welcher die Stützschicht 3 als innerste Schicht jedenfalls so leitfähig macht, dass kritische Werte elektrischer Aufladung vermieden werden.

Es ist bevorzugt, dass das Rohr 1 eine Begrenzungsschicht 7 aufweist, welche in Fig. 1 die äußerste Schicht des Rohres 1 bildet. In diesem Ausführungsbeispiel ist die Begrenzungsschicht 7 direkt auf der äußeren Sperrschicht 6 angeordnet. Mit Vorteil besteht die Begrenzungsschicht 7 aus einem Kunststoff bzw. einem Polyamid bzw. PA 6. Die Schichtdicke der Begrenzungsschicht 7 mag sich auf 0,3 mm belaufen.

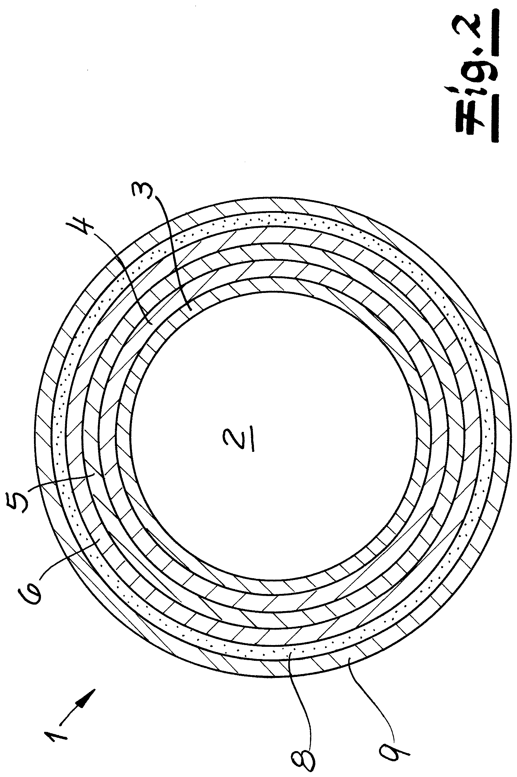

Das in Fig. 2 gezeigt Ausführungsbeispiel ist ein Rohr 1, welches bezüglich der Schichten 3 bis 6 identisch zum ersten Ausführungsbeispiel ausgestaltet ist. Im Unterschied zum ersten Ausführungsbeispiel wurde die Begrenzungsschicht 7 jedoch zweilagig ausgebildet. So umfasst die Begrenzungsschicht 7 des zweiten Ausführungsbeispiels nach Fig. 2 eine Haftvermittlerlage 8 sowie eine Begrenzungslage 9. Die Begrenzungslage 9 dieses Ausführungsbeispiels besteht vorzugsweise aus einem Kunststoff, insbesondere einem Polyamid und besonders vorzugsweise aus PA 11 oder PA 12. Aufgrund der schlechteren Haftung von PA 11 bzw. PA 12 auf Vinylalkoholkunststoffen ist die Haftvermittlerlage 8 vorgesehen, welche beispielsweise ein Polyolefin, insbesondere Polypropylen oder Polyethylen, aufweisen kann. Die Haftvermittlerlage kann allerdings auch ein haftungsmodifiziertes Polyamid oder ein Polyamid 6 umfassen. In diesem Ausführungsbeispiel mag die Schichtdicke der Haftvermittlerlage 8 0,05 mm betragen. Die Schichtdicke der Begrenzungslage 9 kann sich beispielsweise auf 0,25 mm belaufen.

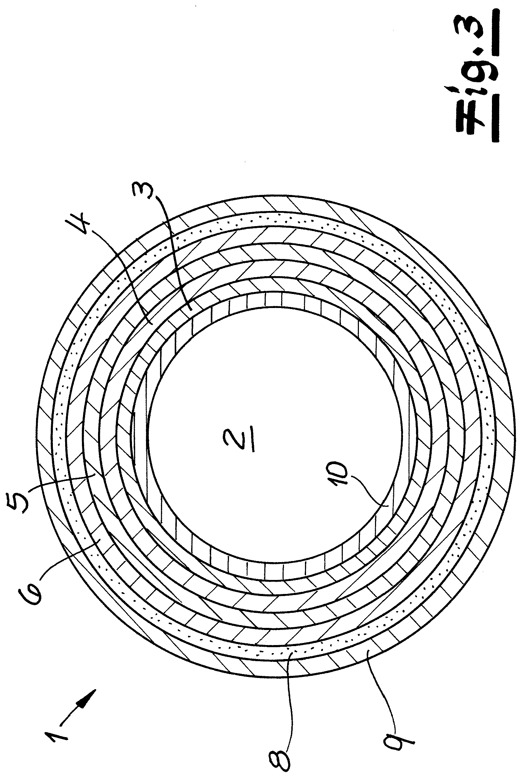

In Fig. 3 ist ein drittes Ausführungsbeispiel eines erfindungsgemäßen Rohres 1 gezeigt, welches sich gegenüber dem Ausführungsbeispiel aus Fig. 2 vor allem dadurch unterscheidet, dass nicht die Stützschicht 3, sondern eine daran innen angrenzende Schutzschicht 10 die innerste Schicht des Rohres 1 bildet. Die Schutzschicht 10 kann beispielsweise ein Polyamid oder ein Fluorpolymer aufweisen. Vorzugsweise handelt es sich bei dem Fluorpolymer um ein ETFE. Die Schichtdicke der Schutzschicht 10 mag 0,15 mm betragen. Mit Vorteil umfasst die Schutzschicht 10 einen Zuschlagstoff, um die Leitfähigkeit der Schutzschicht 10 zu erhöhen. Bei dem Zuschlagstoff mag es sich insbesondere um Leitruß handeln.

### Bezugszeichenliste:

- 1: Rohr
- 2: Lumen
- 3: Stützschicht
- 4: innere Sperrschicht
- 5: Trennschicht
- 6: äußere Sperrschicht
- 7: Begrenzungsschicht
- 8: Haftvermittlerlage von 7
- 9: Begrenzungslage von 7
- 10: Schutzschicht

## Patentansprüche

1. Verwendung eines Rohrs (1) zur Führung von Wasserstoff, insbesondere in einem Fahrzeug, wobei das Rohr (1) ein Lumen (2) einschließt und mehrere Schichten umfasst, wobei das Rohr (1) wenigstens zwei Sperrschichten (4, 6) aufweist, wobei eine innere Sperrschicht (4) der wenigstens zwei Sperrschichten (4, 6) einen ersten Kunststoff umfasst, wobei eine äußere Sperrschicht (6) der wenigstens zwei Sperrschichten (4, 6) einen zweiten Kunststoff umfasst, wobei der erste Kunststoff ein Vinylalkoholkunststoff ist, wobei die Sperrschichten (4, 6) durch eine Trennschicht (5) voneinander getrennt sind, wobei das Rohr (1) eine Stützschicht (3) aufweist, wobei die Stützschicht (3) von der inneren Sperrschicht (4) umschlossen ist,
**dadurch gekennzeichnet, dass**
der zweite Kunststoff ein Vinylalkoholkunststoff ist.

2. Verwendung nach Anspruch 1, wobei die Trennschicht (5) einen Kunststoff, vorzugsweise ein Polyamid und insbesondere PA 6 umfasst.

3. Verwendung nach einem der Ansprüche 1 oder 2, wobei die Stützschicht (3) ein Material aufweist, welches weicher als dasjenige der inneren Sperrschicht (4) ist.

4. Verwendung nach einem der Ansprüche 1 bis 3, wobei der erste Kunststoff und/oder der zweite Kunststoff ein Ethylen-Vinylalkohol-Copolymer (EVOH), ein Butendiol-Vinylalkohol-Copolymer (BVOH) oder ein Polyvinylalkohol (PVOH) ist.

5. Verwendung nach einem der Ansprüche 1 bis 4, wobei die Schichtdicke der inneren Sperrschicht (4) kleiner-gleich der Schichtdicke der äußeren Sperrschicht (6) ist.

6. Verwendung nach einem der Ansprüche 1 bis 5, wobei die addierte Dicke der Schichtdicken der inneren Sperrschicht (4) und der äußeren Sperrschicht (6) wenigstens 0,1 mm bzw. 0,2 mm bzw. 0,3 mm beträgt.

7. Verwendung nach einem der Ansprüche 1 bis 6, wobei das Rohr (1) eine dritte Sperrschicht und eine zweite Trennschicht aufweist, wobei die dritte Sperrschicht die äußere Sperrschicht (6) umschließt, wobei die zweite Trennschicht zwischen der äußeren Sperrschicht (6) und der dritten Sperrschicht angeordnet ist.

8. Verwendung nach einem der Ansprüche 1 bis 7, wobei eine Begrenzungsschicht (7, 8, 9) die äußere Sperrschicht (6) bzw. die dritte Sperrschicht umschließt und vorzugsweise einen Kunststoff, weiter vorzugsweise ein Polyamid und insbesondere PA 6, PA 11, PA 12 und/oder PA 612 aufweist.

9. Verwendung nach einem der Ansprüche 1 bis 8, wobei das Rohr (1) wenigstens eine Haftvermittlerlage (8) aufweist, wobei vorzugsweise die Begrenzungsschicht (7, 8, 9) die Haftvermittlerlage (8) und eine Begrenzungslage (9) umfasst, wobei die Begrenzungslage (9) bevorzugtermaßen einen Kunststoff, insbesondere ein Polyamid, beispielsweise PA 11, PA 12 und/oder PA 612, umfasst.

10. Verwendung nach einem der Ansprüche 1 bis 9, wobei die Stützschicht (3) eine Schutzschicht (10) umschließt, wobei die Schutzschicht (10) bevorzugt die innerste Schicht des Rohrs (1) bildet, wobei bevorzugt ist, dass die Schutzschicht (10) ein Fluorpolymer, insbesondere ETFE, aufweist.

11. Verwendung nach einem der Ansprüche 1 bis 10, wobei die innerste Schicht (3, 10), insbesondere die Stützschicht (3) bzw. die Schutzschicht (10), einen Zuschlagstoff zur Vergrößerung der Leitfähigkeit, beispielsweise Leitruß, umfasst.

## Claims

1. Use of a pipe (1) for conducting hydrogen, in particular in a vehicle, the pipe (1) enclosing a lumen (2) and comprising a plurality of layers, the pipe (1) having at least two barrier layers (4, 6), an inner barrier layer (4) of the at least two barrier layers (4, 6) comprising a first plastics material, an outer barrier layer (6) of the at least two barrier layers (4, 6) comprising a second plastics material, the first plastics material being a vinyl alcohol plastics material, the barrier layers (4, 6) being separated from one another by a separating layer (5), the pipe (1) having a supporting layer (3), the supporting layer (3) being enclosed by the inner barrier layer (4),
**characterized in that**
the second plastics material is a vinyl alcohol plastics material.

2. Use according to claim 1, wherein the separating layer (5) comprises a plastics material, preferably a polyamide and in particular PA 6.

3. Use according to either of claims 1 or 2, wherein the supporting layer (3) comprises a material which is softer than that of the inner barrier layer (4).

4. Use according to any of claims 1 to 3, wherein the first plastics material and/or the second plastics material is an ethylene vinyl alcohol copolymer (EVOH), a butenediol vinyl alcohol copolymer (BVOH) or a polyvinyl alcohol (PVOH).

5. Use according to any of claims 1 to 4, wherein the layer thickness of the inner barrier layer (4) is less than or equal to the layer thickness of the outer barrier layer (6).

6. Use according to any of claims 1 to 5, wherein the added thickness of the layer thicknesses of the inner barrier layer (4) and the outer barrier layer (6) is at least 0.1 mm, 0.2 mm and 0.3 mm, respectively.

7. Use according to any of claims 1 to 6, wherein the pipe (1) has a third barrier layer and a second separating layer, wherein the third barrier layer encloses the outer barrier layer (6), wherein the second separating layer is arranged between the outer barrier layer (6) and the third barrier layer.

8. Use according to any of claims 1 to 7, wherein a boundary layer (7, 8, 9) encloses the outer barrier layer (6) or the third barrier layer and preferably comprises a plastics material, more preferably a polyamide and in particular PA 6, PA 11, PA 12 and/or PA 612.

9. Use according to any of claims 1 to 8, wherein the pipe (1) has at least one adhesion promoter layer (8), wherein preferably the boundary layer (7, 8, 9) comprises the adhesion promoter layer (8) and a boundary ply (9), wherein the boundary ply (9) preferably comprises a plastics material, in particular a polyamide, for example PA 11, PA 12 and/or PA 612.

10. Use according to any of claims 1 to 9, wherein the supporting layer (3) encloses a protective layer (10), wherein the protective layer (10) preferably forms the innermost layer of the pipe (1), wherein it is preferred that the protective layer (10) comprises a fluoropolymer, in particular ETFE.

11. Use according to any of claims 1 to 10, wherein the innermost layer (3, 10), in particular the supporting layer (3) or the protective layer (10), comprises an additive for increasing the conductivity, for example conductive carbon black.

## Revendications

1. Utilisation d'un tube (1) pour le guidage d'hydrogène, en particulier dans un véhicule, dans laquelle le tube (1) enferme une lumière (2) et comprend plusieurs couches, dans laquelle le tube (1) présente au moins deux couches barrières (4, 6), dans laquelle une couche barrière intérieure (4) parmi les au moins deux couches barrières (4, 6) comprend une première matière plastique, dans laquelle une couche barrière extérieure (6) parmi les au moins deux couches barrières (4, 6) comprend une seconde matière plastique, dans laquelle la première matière plastique est une matière plastique à base d'alcool vinylique, dans laquelle les couches barrières (4, 6) sont séparées l'une de l'autre par une couche de séparation (5), dans laquelle le tube (1) présente une couche de support (3), dans laquelle la couche de support (3) est entourée par la couche barrière intérieure (4),
**caractérisée en ce que**
la seconde matière plastique est une matière plastique à base d'alcool vinylique.

2. Utilisation selon la revendication 1, dans laquelle la couche de séparation (5) comprend une matière plastique, de préférence un polyamide et en particulier du PA 6.

3. Utilisation selon l'une des revendications 1 ou 2, dans laquelle la couche de support (3) présente un matériau qui est plus souple que celui de la couche barrière intérieure (4).

4. Utilisation selon l'une des revendications 1 à 3, dans laquelle la première matière plastique et/ou la seconde matière plastique sont un copolymère éthylène-alcool vinylique (EVOH), un copolymère butènediol-alcool vinylique (BVOH) ou un alcool polyvinylique (PVOH).

5. Utilisation selon l'une des revendications 1 à 4, dans laquelle l'épaisseur de couche de la couche barrière intérieure (4) est inférieure ou égale à l'épaisseur de couche de la couche barrière extérieure (6).

6. Utilisation selon l'une des revendications 1 à 5, dans laquelle l'épaisseur additionnée des épaisseurs de couches de la couche barrière intérieure (4) et de la couche barrière extérieure (6) est d'au moins 0,1 mm ou 0,2 mm ou 0,3 mm.

7. Utilisation selon l'une des revendications 1 à 6, dans laquelle le tube (1) présente une troisième couche barrière et une seconde couche de séparation, dans laquelle la troisième couche barrière entoure la couche barrière extérieure (6), dans laquelle la seconde couche de séparation est disposée entre la couche barrière extérieure (6) et la troisième couche barrière.

8. Utilisation selon l'une des revendications 1 à 7, dans laquelle une couche de délimitation (7, 8, 9) entoure la couche barrière extérieure (6) ou la troisième couche barrière et présente de préférence une matière plastique, plus préférablement un polyamide et en particulier du PA 6, du PA 11, du PA 12 et/ou du PA 612.

9. Utilisation selon l'une des revendications 1 à 8, dans laquelle le tube (1) présente au moins une couche d'agent adhésif (8), dans laquelle, de préférence la couche de délimitation (7, 8, 9) comprend la couche d'agent adhésif (8) et une couche de délimitation (9), dans laquelle la couche de délimitation (9) comprend de préférence une matière plastique, en particulier un polyamide, par exemple du PA 11, du PA 12 et/ou du PA 612.

10. Utilisation selon l'une des revendications 1 à 9, dans laquelle la couche de support (3) entoure une couche de protection (10), dans laquelle la couche de protection (10) forme de préférence la couche la plus interne du tube (1), dans laquelle, de préférence, la couche de protection (10) présente un fluoropolymère, en particulier de l'ETFE.

11. Utilisation selon l'une des revendications 1 à 10, dans laquelle la couche la plus interne (3, 10), en particulier la couche de support (3) ou la couche de protection (10), comprend un agrégat pour augmenter la conductivité, par exemple du noir de carbone conducteur.
